# EUROPÄISCHE PATENTSCHRIFT

(11) **EP 0 496 994 B1**
(45) Veröffentlichungstag und Bekanntmachung des Hinweises auf die Patenterteilung: **26.04.1995**
(21) Anmeldenummer: 91121865.9
(22) Anmeldetag: 19.12.1991
(51) Int. Cl.: F16M 11/04

(54) **Stativ**
Support
Support

(30) Priorität: 10.01.1991 DE 9100250 U
(43) Veröffentlichungstag der Anmeldung: 05.08.1992
(73) Patentinhaber: DELMA ELEKTRO-UND MEDIZINISCHE APPARATEBAU GESELLSCHAFT mbH, D-78532 Tuttlingen (DE)
(72) Erfinder: Gull, Kurt, W-7200 Tuttlingen (DE)
(74) Vertreter: Manitz, Gerhart, Dipl.-Phys. Dr.

(56) Entgegenhaltungen:
- EP-A- 0 415 891
- DE-A- 2 061 662
- DE-A- 2 311 257
- DE-U- 9 100 250
- GB-A- 2 230 946
- US-A- 3 269 684
- US-A- 4 403 760

## Beschreibung

Es ist bekannt, Stative, insbesondere Schwenkstative, für die unterschiedlichsten Aufgaben einzusetzen. Insbesondere werden Schwenkstative in der Elektromedizin verwendet, um mit Hilfe derartiger Stative ein entsprechendes elektromedizinisches Gerät in eine optimale Bedienposition zu bringen.

Dabei ist es erforderlich, schwere Zulasten, also elektromedizinische Geräte oder dergleichen, ohne großen Kraftaufwand in unterschiedlichen Höhen anzuordnen, was normalerweise durch ein Verschwenken eines Schwenkarmes des Statives um eine horizontale Achse erfolgt.

Hierzu ist bei bekannten Stativen z.B. ein Federausgleich für die Zulast oder ein hydraulischer Antrieb vorgesehen. Ein Federausgleich hat dabei den Nachteil, daß ein Austarieren nur für einen engen Zulastbereich möglich ist. Ein hydraulischer Antrieb ermöglicht zwar den Ausgleich sowohl von leichten als auch von schweren Zulasten, er hat jedoch den Nachteil, daß er teuer ist und im Laufe der Zeit insbesondere im Langzeitgebrauch zu Leckagen neigt.

Bei einem bekannten Deckenstativ für die Halterung von in ihrer Lage feststellbaren Patientenüberwachungsgeräten und für den Anschluß von Energie- und Gasversorgungsleitungen (DE-A-2 061 662) ist ein Antriebsmotor nahe der Decke angeordnet, der über einen durch ein festes Außenrohr sich nach unten erstreckenden Spindelantrieb einen Hebelarm eines mit ihm im wesentlichen ausgerichteten Doppelhebels beaufschlagt. Diese Art des Antriebes ist sehr platzaufwendig, da sie praktisch den gesamten Innenraum des für die Befestigung an der Decke vorgesehenen Außenrohrs einnimmt. Bei einer weiteren bekannten mikrochirurgischen Operationseinheit (DE-A-2 311 257) ist auf einem senkrechten, mit seinem einen Ende an der Decke eines Raumes befestigten Trägerrohr eine Hülse drehbar gelagert, an deren unterem freien Ende ein horizontaler, um eine waagerechte Achse verschwenkbarer Schwenkarm an eine Höhenverstellung angeschlossen ist, dessen freies Ende einen senkrechten Pendelarm mit endseitig in einem Gelenk gehaltenem Mikroskop trägt. Zur Höhenverstellbarkeit des Mikroskops ist der Schwenkarm mit einem motorischen Antrieb verbunden, welcher aus einem um eine horizontale Achse schwenkbar an der Hülse befestigten Motor besteht, der über ein sich im wesentlichen senkrecht zum Schwenkarm erstreckendes Zuggestänge an letzterem angreift. Auch hier erfordern der Motor und das Zuggestänge einen erheblichen Platz für ihre Unterbringung. Als nachteilig muß weiter angesehen werden, daß das Gestänge außerhalb der übrigen Bauelemente angeordnet ist, so daß eine Verschmutzungsgefahr für den Motor und das Gestänge besteht und die Bedienungsperson sich an den außenliegenden und beweglichen Bauelementen verletzen kann.

Die gleichen Nachteile liegen bei einem bekannten Gerät zum Heben und Senken von Lasten vor (US-A-4 403 760); hier wird der Platzbedarf noch dadurch erhöht, daß das Betätigungsgestänge durch ein besonderes stationär angeordnetes Gehäuse abgedeckt sein muß.

Das der vorliegenden Erfindung zugrundeliegende Problem besteht nun darin, ein Stativ zu schaffen, das sich unabhängig von der jeweils daran angeordneten Zulast vorzugsweise vertikal leicht verschwenken läßt und auch im Langzeitgebrauch zuverlässig arbeitet, wobei insbesondere ein platzsparender und dennoch nach außen leicht abschirmbarer Aufbau der Kraftübertragungsvorrichtung gewährleistet sein soll.

Zur Lösung dieser Aufgabe sind die Merkmale des Patentanspruches 1 vorgesehen.

Aufgrund dieser Ausbildung wird vermieden, daß sich die Zugvorrichtung im wesentlichen senkrecht zum Schwenkarm erstrecken muß; sie ist vielmehr in einer Zwischenstellung vollständig und im übrigen zumindest in etwa mit dem Schwenkarm axial ausgerichtet, wodurch insbesondere in vertikaler Richtung ein sehr platzsparender Aufbau erzielt wird, der für die Befestigung des Statives möglichst nahe an einer Decke von besonderem Vorteil ist.

Durch die Verwendung eines Motors, insbesondere eines Elektromotors, der über eine Kraftübertragungsvorrichtung mit dem Schwenkarm verbunden ist, um die Drehbewegung des Motors in eine Schwenkbewegung des Schwenkarms umzusetzen, läßt sich erfindungsgemäß ein Stativ schaffen, das sich mit relativ kleinen und leichten Elektromotoren verschwenken läßt, um ein am Stativ angeordnetes Gerät in eine optimale Höhenlage zu bewegen. Bekannte Lösungen mit Hydraulikantrieben sind demgegenüber störanfällig und teuer.

Dabei ist es besonders vorteilhaft, daß die Energiezufuhr zum Motor auf einfache Weise realisiert werden kann, was ebenso wie die allgemeine Verfügbarkeit von Elektromotoren zu einem kostengünstigen Aufbau des Stativs führt.

Um mit einer relativ kleinen, vom Motor bewirkten Schwenkbewegung des Hebelteils einen großen Schwenkweg für eine am Tragarm angeordnete Zulast zu erhalten, beträgt nach einer bevorzugten Ausführungsform der Abstand zwischen dem wirksamen Schwenkpunkt des Schwenkarms und dem Angriffspunkt der Zugvorrichtung am Hebelteil nur einen Bruchteil der Länge des Schwenkarms.

Bei einer zweckmäßigen praktischen Ausgestaltung der Erfindung ist vorgesehen, daß das Hebelteil als fest mit dem Schwenkarm verbundene Hebellasche ausgebildet ist, die sich im wesentlichen senkrecht zum Schwenkarm erstreckt.

Um die vom Motor erzeugte Zugkraft stets optimal ausnutzen zu können, ist bei einer weiteren Ausgestaltung der Erfindung vorgesehen, daß der Motor schwenkbar am Lagergehäuse angeordnet ist, so daß die mittels der Gewindespindel übertragene Motorkraft unabhängig von der Schwenkstellung des Schwenkarms axial auf das Zuggestänge wirkt.

Ein konstruktiv besonders einfach ausgebildetes Stativ ergibt sich, wenn die mit dem Zuggestänge axial ausgerichtete Gewindespindel das Abtriebsglied eines vom Motor beaufschlagten Getriebes bildet.

Um auf eine besondere Feststellvorrichtung zum Arretieren des Schwenkarms in einer eingestellten Stellung verzichten zu können, ist vorgesehen, daß das Getriebe ein Schneckengetriebe ist.

Um nicht nur die Motorkraft zum Verschwenken optimal auszunutzen, sondern auch das vom Motor über die Hebellasche erzeugte Schwenkmoment für den Schwenkarm in einem besonders günstigen Bereich zu halten, ist vorgesehen, daß der Motor so am Lagergehäuse schwenkbar angeordnet ist, daß die Gewindespindel und das dazu axiale Zuggestänge im wesentlichen parallel zum Schwenkarm verlaufen, wenn sich der Schwenkarm in der Mitte seines Schwenkbereichs befindet.

Eine weitere vorteilhafte Ausgestaltung der Erfindung zeichnet sich dadurch aus, daß das Zuggestänge zwei parallel mit Abstand zueinander angeordnete Zuglaschen aufweist, welche mit ihrem einen Ende über einen Befestigungsblock mit der Gewindespindel gekoppelt sind und die mit ihrem anderen Ende jeweils an einer mit dem Schwenkarm fest verbundenen Hebellasche angelenkt sind. Hierdurch wird also ein gabelförmig ausgebildetes Zuggestänge geschaffen, daß so im Lagergehäuse angeordnet werden kann, daß zu einem als Zulast am Schwenkarm angeordneten medizinischen Gerät Kabel und Leitungen, insbesondere Versorgungskabel, ungehindert durch das Lagergehäuse und den Schwenkarm hindurchgeführt werden können.

Um stets eine lagerichtige Anordnung der Zulast am Stativ unabhängig von der Schwenkstellung des entsprechenden Schwenkarms zu ermöglichen, weist der Schwenkarm ein Oberteil und ein parallel dazu angeordnetes, das Hebelteil tragendes Unterteil auf, wobei sowohl das Ober- als auch das Unterteil mit einem Ende schwenkbar am Lagergehäuse und mit dem anderen Ende an einem Zulaßgehäuse so angelenkt ist, daß ein Parallelogramm-Gestänge gebildet ist, mittels dessen das Zulaßgehäuse derart parallel geführt wird, daß es unabhängig von der jeweiligen Schwenkstellung des Schwenkarms horizontal ausgerichtet ist.

Um auch sehr schwere Zulasten mittels eines relativ kleinen Elektromotors bewegen zu können, sollen zwischen dem Lagergehäuse und dem Schwenkarm Zugfedern angeordnet sein. Die Zugfedern sind zweckmäßigerweise an den dem Schwenkarm zugeordneten Enden an den Hebellaschen angelenkt. Zweckmäßigerweise sind die Zugfedern als Gaszugfedern ausgebildet.

Für die Bewegung der Zulast in die jeweils erforderliche Bedienungsposition kann auf einfache Weise ein weiterer Freiheitsgrad dadurch geschaffen werden, daß das den Schwenkarm tragende Lagergehäuse um eine vorzugsweise vertikale Achse drehbar an einem tragenden Stativelement gelagert ist.

Die Erfindung wird im folgenden beispielsweise anhand der Zeichnung näher erläutert; in dieser zeigt:
- Fig. 1: eine schematische teilweise geschnittene Seitenansich eines erfindungsgemäßen Stativs,
- Fig. 2: einen schematischen Schnitt im wesentlichen nach Linie II-II in Fig. 1,
- Fig. 3: eine schematische teilweise geschnittene Seitenansicht eines erfindungsgemäßen Stativs mit Gaszugfedern,
- Fig. 4: einen schematischen Schnitt im wesentlichen nach Linie IV-IV in Fig. 3,
- Fig. 5: eine schematische Darstellung der Motorschwenklage in der oberen Endstellung des Schwenkarms und
- Fig. 6: eine schematische Darstellung der Motorschwenklage in der unteren Endstellung des Schwenkarms.

In den verschiedenen Figuren der Zeichnung sind einander entsprechende Bauteile mit gleichen Bezugszeichen bezeichnet.

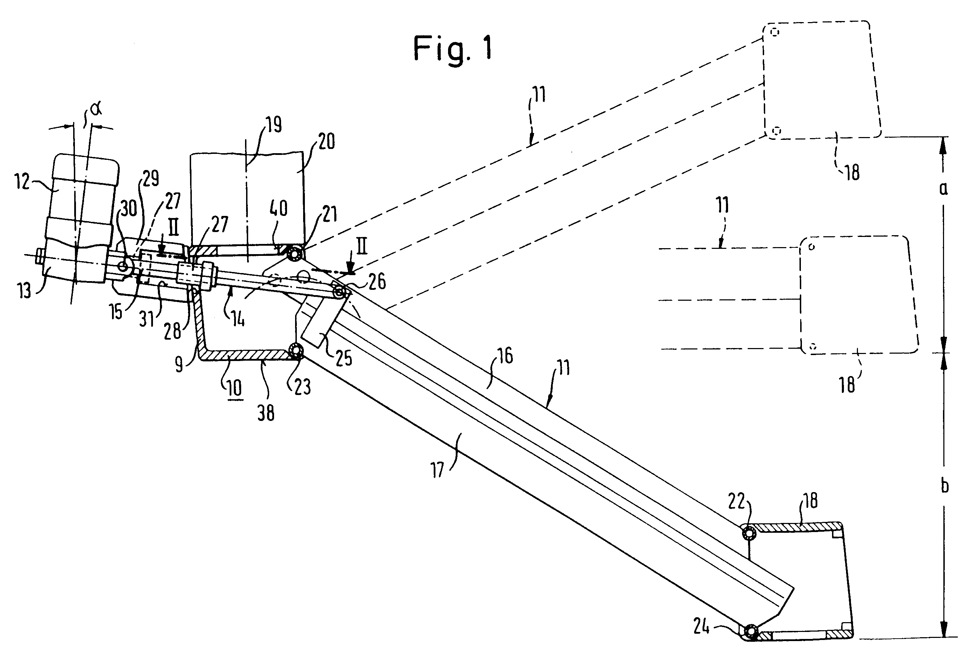

Fig. 1 zeigt ein Stativ, daß mit einem Deckenrohr 20 in nicht dargestellter Weise an der Decke eines Raumes so befestigt ist, daß es um eine vertikale Achse 19 drehbar ist. Am Deckenrohr 20 ist unten ein Lagergehäuse 10 für einen Schwenkarm 11 angebracht.

Der Schwenkarm 11 weist dabei ein Oberteil 16 auf, daß mit seinem einen Ende mittels eines einen festen Drehpunkt bildenden Schwenklagers 21 mit horizontaler Drehachse am Lagergehäuse 10 schwenkbar gelagert ist. Ein Zulastgehäuse 18 ist mittels eines Schwenklagers 22 mit horizontaler Drehachse am anderen Ende des Oberteils 16 des Schwenkarms 11 angebracht.

Parallel zum Oberteil 16 weist der Schwenkarm 11 ein Unterteil 17 auf, das mit seinem einen Ende über ein unteres Schwenklager 23 mit horizontaler Drehachse am Lagergehäuse 10 angelenkt ist und das an seinem anderen Ende über ein unteres Schwenklager 24 mit horizontaler Drehachse mit dem Zulastgehäuse 18 in Verbindung steht.

Die beiden am Lagergehäuse 10 angeordneten Schwenklager 21, 23 weisen unabhängig von der Schwenkstellung des Schwenkarms 11 ebenso wie die am Zulastgehäuse 18 vorgesehenen Schwenklager 22, 24 einen festen Abstand zueinander auf. Entsprechend besitzen die oberen Schwenklager 21, 22 am Oberteil 16 des Schwenkarms 11 und die unteren Schwenklager 23, 24 am Unterteil 17 des Schwenkarms 11 infolge der unveränderlichen Länge der Schwenkarmteile einen festen Abstand, so daß die Schwenklager 21, 22, 23, 24 zusammen mit dem zweigeteilten Schwenkarm 11 eine Parallelführung für das Zulastgehäuse 18 darstellen, mit der das Zulastgehäuse 18 unabhängig von der Schwenklage des Schwenkarms 11 stets horizontal ausgerichtet ist. Das Oberteil 16 und das Unterteil 17 mit den Schwenklagern 21, 22, 23, 24 bilden also ein Parallelogrammgestänge.

Im Bereich des dem Lagergehäuse 10 zugewandten Ende des Schwenkarms 11 sind am Unterteil 17 Hebellaschen 25 befestigt, die sich im wesentlichen radial in Bezug auf das untere Schwenklager 23 am Lagergehäuse 10 erstrecken und an deren vom Schwenklager 23 abgewandten Enden ein Zuggestänge 14 über Gelenke 26 angebracht ist, das im wesentlichen senkrecht zu den Hebellaschen 25 verläuft.

Die Hebellaschen 25 sind dabei im Verhältnis zur Länge und Dicke des Schwenkarms 11 so klein ausgebildet, daß sie in räumlicher Hinsicht gut im Schwenkarm 11 untergebracht werden können, ohne die Durchführung von Kabeln und Leitungen durch den Schwenkarm 11 zu behindern. Vorzugsweise ist die Länge der Hebellaschen 25 größenordnungsmäßig eine Zehnerpotenz kleiner als die Länge des Schwenkarms 11.

Das Zuggestänge 14 ist an seinem von den Gelenken 26 abgewandten Enden einer Spindelmutter 27 befestigt, in die eine Gewindespindel 15 eingeschraubt ist, welche die Abtriebseite eines Getriebes 13 bildet.

Die Antriebsseite des Getriebes 13, das nicht im einzelnen dargestellt ist, wird von einem Schneckenrad gebildet, das mit einem an der Gewindespindel 15 angeordneten Schneckenabschnitt kämmt und von einem Elektromotor 12 beaufschlagt ist.

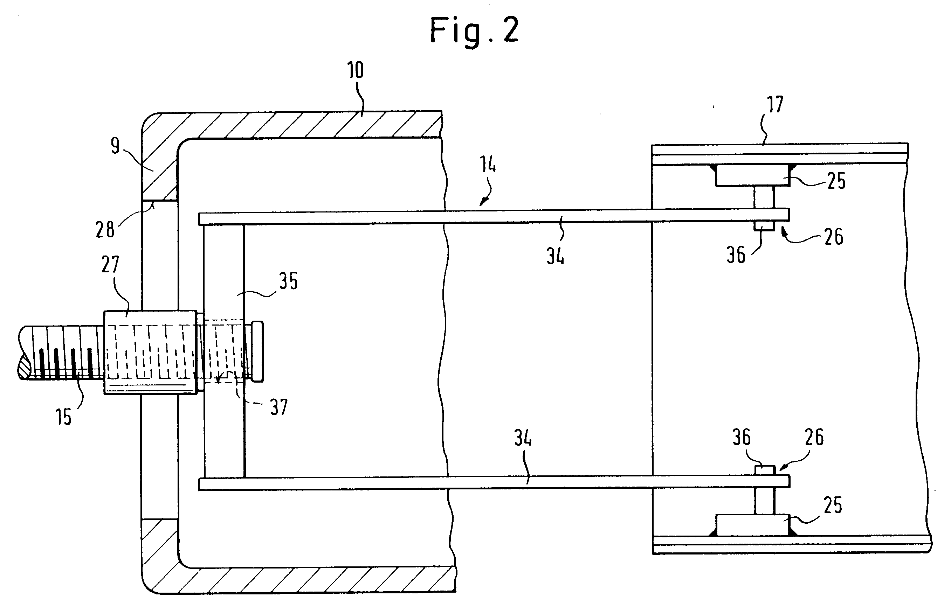

Bei dem Ausführungsbeispiel nach Fig. 2 besitzt das Zuggestänge 14 zwei mit Abstand parallel zueinander verlaufende Zuglaschen 34, die an einem quaderförmigen, starr mit der Spindelmutter 27 verbundenen Befestigungsblock 35 fest angebracht sind. Mit den Hebellaschen 25 sind die Zuglaschen 34 über Lagerstifte 36 verbunden, die sich durch entsprechende, nicht näher dargestellte Lageröffnungen in den Zuglaschen 34 hindurch
erstrecken, so daß die Gelenke 26 gebildet sind. Um ein Abrutschen der Zuglaschen 34 von den Lagerstiften 36 zu verhindern, können, z.B. nicht gezeigte Sicherungsringe vorgesehen sein.

Um eine Verschiebung des Zuggestänges 14 gegenüber der Gewindespindel 15 in deren Längsrichtung zu ermöglichen, ist in dem Befestigungsblock 35 eine Öffnung 37 vorgesehen, durch die sich die Gewindespindel 15 hindurcherstreckt.

Dabei ist die gabelförmige Ausbildung des Zuggestänges 14 mit der Doppelausführung der Zuglaschen 34 wichtig, weil dadurch von oben durch das Deckenrohr 20 und dessen untere Öffnung 40 hindurch nicht dargestellte Kabel auch zwischen den Zuglaschen 34 hindurch zu einem am Zulastgehäuse angeordneten, hochzuhebenden Gerät geführt werden können.

Die Anordnung des Zuggestänges 14, der Spindelmutter 27 und der Gewindespindel 15 erstreckt sich durch eine im oberen Bereich einer hinteren Seitenwand 9 des Lagergehäuses 10 vorgesehene Durchlaßöffnung 28 hindurch, die so breit ausgebildet ist, daß sie eine Verschiebung des Zuggestänges 14 zur Längenverstellung dieser Anordnung nicht behindert.

Zur Befestigung des Elektromotors 12 am Lagergehäuse 10 ist eine Befestigungsklammer 29 am Lagergehäuse 10 angebracht, an der das Gehäuse des Elektromotors 12 über ein Motorschwenklager 30 mit horizontaler Drehachse angelenkt ist und die einen Innenraum 31 zur Aufnahme der Gewindespindel 15 bzw. der Spindelmutter 27 und ggf. eines Abschnitts des Zzuggestänges 14 aufweist.

Soll der Schwenkarm 11 des beschriebenen Stativs aus seiner in Fig. 1 mit durchgezogenen Linien dargestellten unteren Endstellung in seine gestrichelt dargestellte obere Endstellung verschwenkt werden, so wird die Gewindespindel 15 vom Motor 12 so zu einer Drehbewegung angetrieben, daß die darauf angeordnete Spindelmutter 27 in Fig. 1 nach links verschoben wird und dabei das Zuggestänge 14 nach links zieht.

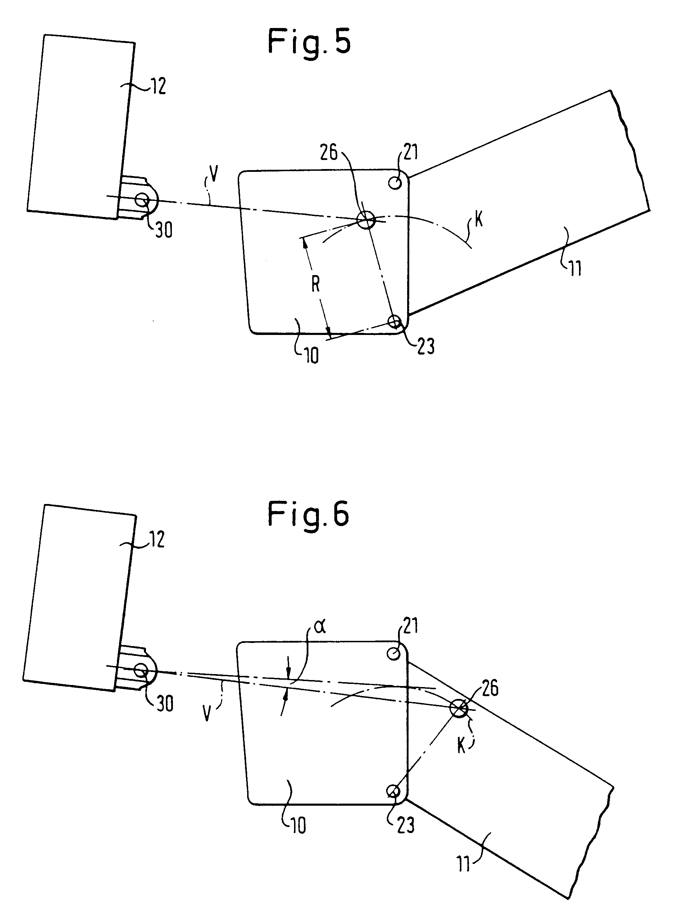

Wie anhand der Fig. 5 und 6 zu erkennen ist, bewegt sich dabei das Gelenk 26 entlang eines Kreisbogens K, dessen Radius duch den Abstand R des Gelenks 26 vom festen unteren Schwenklager 23, das den wirksamen Schwenkpunkt des Schwenkarms 11 bezüglich der Kraftübertragung darstellt, festgelegt ist. Dabei wird die Verbindungslinie zwischen dem Motorschwenklager 30 und dem Gelenk 26, die die Wirkungslinie V der vom Motor 12 ausgeübten Zugkraft darstellt, um einen Winkel α verschwenkt. Diese Schwenkbewegung wird durch die gelenkige Befestigung des Motors 12 mittels des Motorschwenklagers 30 ermöglicht.

Sobald der Schwenkarm 11 seine in Fig. 1 gestrichelt dargestellte obere Endstellung einnimmt, in der die Spindelmutter 27 - wie in Fig. 1 ebenfalls gestrichelt dargestellt - z.B. an einem von der Befestigungsklammer 29 gebildeten Anschlag anliegt, befindet sich das Gelenk 26 in der in Fig. 5 dargestellten Position.

Da der wirksame Hebelarm für das zur Verschwenkung des Schwenkarms 11 erforderliche, von der Zugkraft des Motors 12 über die Hebellasche 25 erzeugte Drehmoment vom Abstand der Wirkungslinie V der Zugkraft vom festen Schwenklager 23 abhängt und der Abstand der Wirkungslinie V der Zugkraft vom Schwenklager 23 beim Verschwenken des Schwenkarms 11 zunächst zu und anschließend wieder abnimmt, wird auch das die Schwenkbewegung bewirkende Drehmoment zunächst größer um anschließend wieder abzunehmen.

Auf diese Weise wird eine Zunahme des Lastmomentes, die durch eine Verlängerung des wirksamen Schwenkarms 11 während der Schwenkewegung bewirkt wird, ausgeglichen.

Da die untere Fläche 38 des Lagergehäuses 10 über Kopfhöhe angeordnet werden muß, damit Personen dort nicht anstoßen, ist der Schwenkbereich des Tragarms 11 gegenüber seiner horizonalen Stellung unsymmetrisch angeordnet, um ein genügend weites Herabschwenken des Zulastgehäuses zu ermöglichen. Wird der Schwenkarm - wie in Fig. 1 dargestellt - aus seiner horizontalen Lage nach oben in seine Endstellung verschwenkt, so wird das Zulastgehäuse 18 um die Strecke a, die beispielsweise 300 mm beträgt, angehoben. Dagegen läßt sich das Zulastgehäuse aus seiner horizontalen Lage nach unten um die Strecke b absenken, die mit z.B. 400 mm größer ist als die Strecke a.

Entsprechend dieser asymmetrischen Anordnung des Schwenkbeerichs des Schwenkarms 11 ist der Motor 12 derart gekippt am Lagergehäuse 10 angeordnet, daß die Gewindespindel 15, die das Abtriebsglied des Getriebes 13 darstellt, stets um einen von Null verschiednen spitzen Winkel gegen die Horizontale geneigt ist. Damit läßt sich die Wirkungslinie V der Zugkraft so anordnen, daß die Verringerung des auf dem Schwenkarm 11 übertragenen Drehmoments in den Endstellungen des Schwenkbereichs möglichst gering gehalten wird.

Die Arretierung des Schwenkarms 11 in seiner oberen Endstellung des Schwenkbereichs sowie in jeder beliebigen Zwischenstellung erfolgt in vorteilhafter Weise durch das Getriebe 13, das als selbsthemmendes Schneckengetriebe ausgebildet ist. Anstelle eines Schneckengetriebes kann jedoch auch ein anderes Getriebe vorgesehen sein, daß die Drehbewegung des Motors 12 in eine lineare Bewegung des Zuggestänges übersetzt, wobei dann eine geeignete Arretierung für den Schwenkarm vorgesehen sein muß.

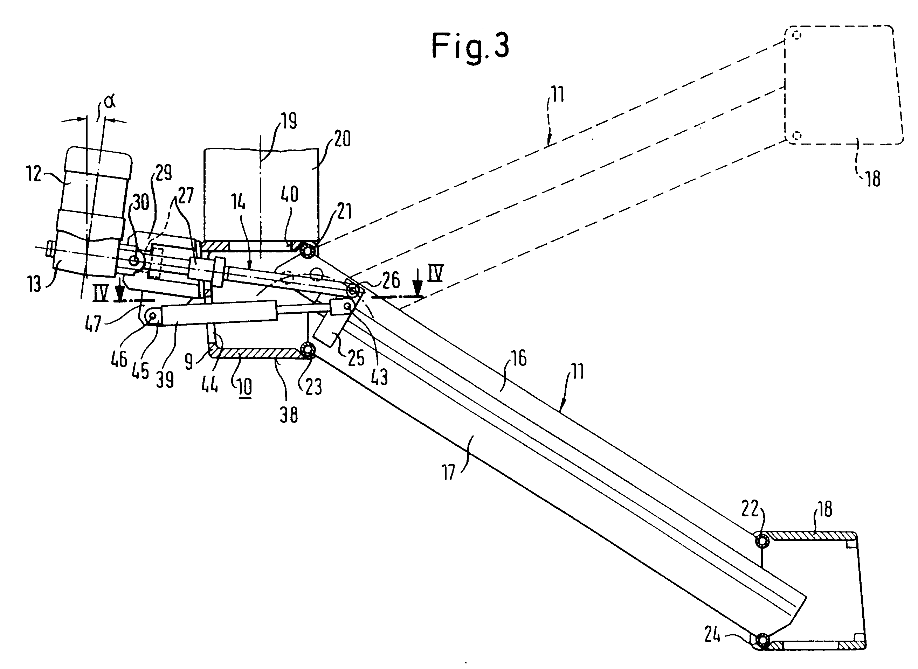

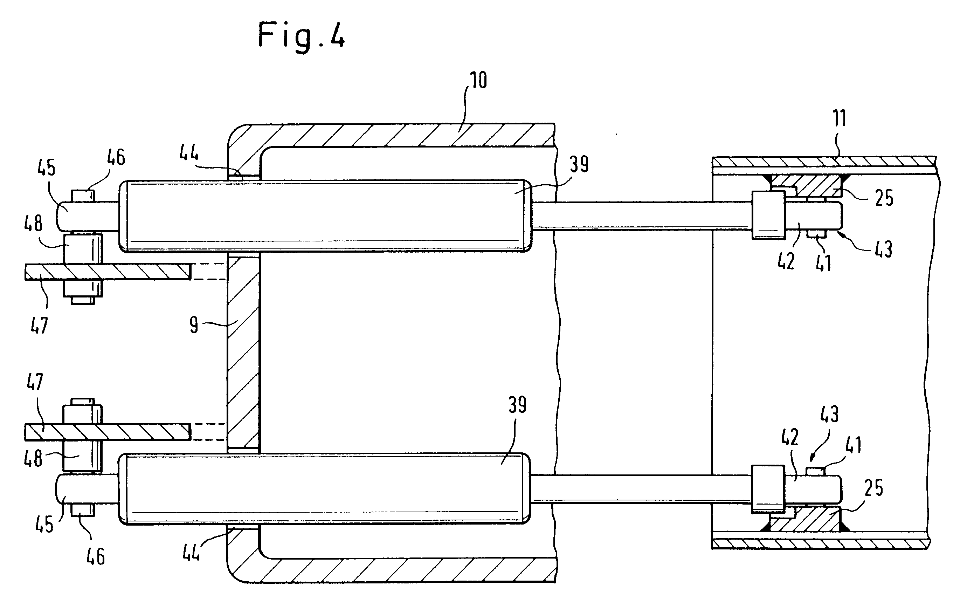

Wie in den Fig. 3 und 4 gezeigt, können zwischen der Hebellasche 25 und dem Lagergehäuse 10 Zugfedern, insbesondere Gaszugfedern 39, angeordnet sein, um am Zulastgehäuse 18 auch relativ schwere Geräte befestigen zu können. Die beiden Gaszugfedern 39, die parallel zueinander verlaufen, sind im wesentlichen unterhalb der Zuglaschen angeordnet, um die Durchführung eines Kabels vom Deckenrohr 20 durch das Lagergehäuse 10 zu einem am Zulastgehäuse 18 befestigten Gerät nicht zu behindern. Zur Befestigung der Gaszugfedern 39 an den Hebellaschen 25 sind an diesen Stifte 41 vorgesehen, auf die die Gaszugfedern 39 mit an ihren einen Enden angeordneten Befestigungselementen 42 aufgesteckt sind, so daß jeweils ein Gelenk 43 gebildet ist. Zur Sicherung der Befestigungselemente 42 können z.B. nicht dargestellte Sicherungsringe auf die Stifte 41 aufgesetzt werden.

Die Gaszugfedern 39, die sich durch entsprechende Öffnungen 44 in der hinteren Seitenwand 9 des Lagergehäuses 10 hindurcherstrecken, weisen an ihren anderen Enden entsprechende Befestigungselemente 45 auf, die schwenkbar auf Lagerstiften 46 aufgesteckt und in nicht dargestellter Weise gegen ein Abrutschen gesichert sind. Die Lagerstifte 46 sind ihrerseits an am Lagergehäuse 10 angebrachten Haltelaschen 47 befestigt.

Die Haltelaschen 47, deren Anbringung am Lagergehäuse 10 in Fig. 4 nur gestrichelt angedeutet ist, können über die Klammer 29 und/oder direkt am Lagergehäuse 10 befestigt sein. Um die Befestigungsabschnitte 45 der Gaszugfedern 39 mit Abstand zu den Haltelaschen 47 auf die Lagerstiften 46 zu halten, sind Abstandshülsen 48 auf die Lagerstifte 46 aufgesteckt, die in nicht dargestellter Weise mit den Haltelaschen 47 verschweißt sind. Auf der von den Gaszugfedern 39 abgewandten Seite der Haltelaschen 47 sind Sicherungsringe auf die Lagerstifte 46 aufgesetzt.

Die Gaszugfedern 39, die zwischen dem Gelenk 26 und dem Schwenklager 23 an der Hebellasche 25 angelenkt sind, besitzen im am weitesten eingeschobenen Zustand eine Kraft von ca. 1500 N und im voll ausgezogenen Zustand eine Endkraft von 2400 N. Die Zugkraft, die von den Gaszugfedern 39 auf die Hebellaschen 25 ausgeübt wird, um die vom Motor 12 erzeugte Zugkraft zum Verschwenken des Tragarms 11 zu unterstützen, wird also im voll ausgezogenen Zustand um 60 % gegenüber der Zugkraft im voll eingeschobenen Anfangszustand erhöht.

Das Anheben und Absenken des Zulastgehäuses 18 durch ein Verschwenken des Schwenkarms 11 erfolgt bei den in den Fig. 3 und 4 dargestellten Stativ in der gleichen Weise wie anhand der Fig. 1 und 2 beschrieben.

## Patentansprüche

1. Stativ
- mit einem Lagergehäuse (10),
- mit einem vertikal verschwenkbar am Lagergehäuse (10) angelenkten Schwenkarm (11), der zum Tragen einer Zuglast ausgebildet ist, und
- mit einem Motor (12) zum vertikalen Verschwenken des Schwenkarmes (11), der am Lagergehäuse (10) angeordnet ist,
- wobei zwischen dem Motor (12) und dem Schwenkarm (11) eine Kraftübertragungsvorrichtung (13, 14, 15, 25) vorgesehen ist, die die Drehbewegung des Motors (10) in eine Schwenkbewegung des Schwenkarms (11) umsetzt, dadurch gekennzeichnet, daß die Kraftübertragungsvorrichtung (13, 14, 15, 25) ein sich im wesentlichen annähernd senkrecht zum Schwenkarm erstreckendes Hebelteil (25) aufweist,
- an dem eine Zugvorrichtung (14, 15) angreift, die so an den Motor (12) über ein Getriebe (13) angekoppelt ist, daß die Drehbewegung des Motors (12) in eine Schwenkbewegung des Hebelteils (25) umgewandelt wird, und eine vom Motor (12) zu einer Drehbewegung antreibbare Gewindespindel (15) aufweist, die so an ein das Hebelteil (25) beaufschlagendes Zuggestänge (14) angekoppelt ist, daß die Drehbewegung der Gewindespindel in eine Linearbewegung des Zuggestänges (14) umgewandelt wird,
- wobei ein Schwenklager (30) vorgesehen ist, daß eine Schwenkbewegung des Zuggestänges (14) gegenüber dem Lagergehäuse (10) zuläßt und
- wobei die Gewindespindel (15) und das Zuggestänge (14) in einer Zwischenstellung des Schwenkarms (11) mit diesem axial ausgerichtet sind.

2. Stativ nach Anspruch 1,
bei dem der Abstand (R) zwischen dem wirksamen Schwenkpunkt des Schwenkarms (11) und dem Angriffspunkt der Zugvorrichtung (14, 15) am Hebelteil (25) nur einen Bruchteil der Länge des Schwenkarms (11) beträgt.

3. Stativ nach einem der Ansprüche 1 oder 2,
bei dem das Hebelteil als fest mit dem Schwenkarm (11) verbundene Hebellasche (25) ausgebildet ist, die sich im wesentlichen senkrecht zum Schwenkarm (11) erstreckt.

4. Stativ nach einem der Ansprüche 1 bis 3,
bei dem der Motor (12) schwenkbar am Lagergehäuse (10) angeordnet ist, so daß die mittels der Gewindespindel (15) übertragene Motorkraft unabhängig von der Schwenkstellung des Schwenkarms (11) axial auf das Zuggestänge (14) wirkt.

5. Stativ nach Anspruch 4,
bei dem die mit dem Zuggestänge (14) axial ausgerichtete Gewindespindel (15) das Abtriebsglied eines vom Motor beaufschlagten Getriebes (13) bildet.

6. Stativ nach Anspruch 5,
bei dem das Getriebe (13) ein Schneckengetriebe ist.

7. Stativ nach einem der Ansprüche 4, 5 oder 6,
bei dem der Motor (12) so am Lagergehäuse (10) schwenkbar angeordnet ist, daß die Gewindespindel (15) und das dazu axiale Zuggestänge (14) im wesentlichen parallel zum Schwenkarm (11) verlaufen, wenn sich der Schwenkarm (11) in der Mitte seines Schwenkbereichs befindet.

8. Stativ nach einem der vorhergehenden Ansprüche,
bei dem das Zuggestänge (14) zwei parallel mit Abstand zueinander angeordnete Zuglaschen (34) aufweist, welche mit ihrem einen Ende über einen Befestigungsblock (35) mit der Gewindespindel (15) gekoppelt sind und die mit ihrem anderen Ende jeweils an einer mit dem Schwenkarm (11) fest verbundenen Hebellasche (25) angelenkt sind.

9. Stativ nach einem der vorhergehenden Ansprüche,
bei dem der Schwenkarm (11) ein Oberteil (16) und ein parallel dazu angeordnetes, das Hebelteil (25) tragendes Unterteil (17) aufweist, wobei sowohl das Ober- als auch das Unterteil (16 bzw. 17) mit einem Ende schwenkbar am Lagergehäuse (10) und mit dem anderen Ende an einem Zulastgehäuse (18) so angelenkt ist, daß ein Parallelogrammgestänge gebildet ist, mittels dessen das Zulastgehäuse (18) derart parallel geführt wird, daß es unabhängig von der jeweiligen Schwenkstellung des Schwenkarms (11) horizontal ausgerichtet ist.

10. Stativ nach einem der vorhergehenden Ansprüche,
bei dem zwischen dem Lagergehäuse (10) und dem Schwenkarm (11) Zugfedern (39) angeordnet sind.

11. Stativ nach Anspruch 10,
bei dem die Zugfedern (39) mit ihren dem Schwenkarm (11) zugeordneten Enden an den Hebellaschen (25) angelenkt sind.

12. Stativ nach Anspruch 10 oder 11,
bei dem die Zugfedern als Gaszugfedern (39) ausgebildet sind.

13. Stativ nach einem der vorhergehenden Ansprüche,
bei dem das den Schwenkarm (11) tragende Lagergehäuse (10) um eine vorzugsweise vertikale Achse (19) drehbar an einem tragenden Stativelement (20) gelagert ist.

## Claims

1. Support
- having a bearing housing (10),
- having a pivot arm (11) hinged at the bearing housing (10) so as to be vertically pivotable and formed for carrying a tensile load, and
- having a motor (12) for vertically pivoting the pivot arm (11), the motor being arranged at the bearing housing (10),
- wherein, between the motor (12) and the pivot arm (11), a force transmission apparatus (13, 14, 15, 25) is provided which converts the rotational movement of the motor (10) into a pivotal movement of the pivot arm (11), characterised in that the force transmission apparatus (13, 14, 15, 25) has a lever part (25) extending substantially approaching perpendicular to the pivot arm,
- to which a tie apparatus (14, 15) engages which is coupled to the motor (12) via a transmission (13) in such a manner that the rotational movement of the motor (12) is converted into a pivotal movement of the lever part (25) and which has a threaded spindle (15) drivable in a rotational movement by the motor (12) and being coupled to a tie rod (14) actuating the lever part (25) in such a manner that the rotational movement of the threaded spindle is converted into a linear movement of the tie rod (14),
- wherein a pivot bearing (30) is provided which permits a pivotal movement of the tie rod (14) relative to the bearing housing (10) and
- wherein, in an intermediate position of the pivot arm (11), the threaded spindle (15) and the tie rod (14) are axially aligned with the pivot arm (11).

2. Support in accordance with claim 1, in which the distance (R) between the effective pivot point of the pivot arm (11) and the point of action of the tie apparatus (14, 15) at the lever part (25) only amounts to a fraction of the length of the pivot arm (11).

3. Support in accordance with one of the claims 1 or 2, in which the lever part is formed as a lever bracket (25) fixedly connected to the pivot arm (11) and extending substantially perpendicular to the pivot arm (11).

4. Support in accordance with one of the claims 1 to 3, in which the motor (12) is pivotably arranged at the bearing housing (10) so that the motor force transmitted by means of the threaded spindle (15) acts axially on the tie rod independently of the pivotal position of the pivot arm (11).

5. Support in accordance with claim 4, in which the threaded spindle (15) aligned axially with the tie rod (14) forms the output drive member of a transmission (13) actuated by the motor.

6. Support in accordance with claim 5, in which the transmission (13) is a worm-and-wheel gear.

7. Support in accordance with one of claims 4, 5, or 6, in which the motor (12) is pivotably arranged at the bearing housing (10) in such a manner that the threaded spindle (15) and the tie rod (14) axial thereto extend substantially parallel to the pivot arm (11) when the pivot arm (11) is situated in the middle of its pivotal range.

8. Support in accordance with one of the preceding claims, in which the tie rod (14) comprises two tie brackets (34) arranged separated from and extending parallel to one another which, at one end, are coupled to a threaded spindle (15) via a securing block (35) and, at the other end, are each hinged to a respective lever bracket (25) fixedly connected to the pivot arm (11).

9. Support in accordance with one of the preceding claims, in which the pivot arm (11) comprises an upper part (16) and a lower part (17) arranged parallel thereto which carries the lever part (25), wherein both the upper and the lower parts (16, 17) are pivotally hinged at one end on the bearing housing (10) and are hinged at the other end on a loadable housing (18) in such a manner that a parallelogram linkage is formed, by means of which the loadable housing (18) is guided in a parallel manner such that it is horizontally aligned independently of the respective pivotal position of the pivot arm (11).

10. Support in accordance with one of the preceding claims, in which tension springs (39) are arranged between the bearing housing (10) and the pivot arm (11).

11. Support in accordance with claim 10, in which the tension springs (39) are hinged at the lever brackets (25) by their ends associated with the pivot arm (11).

12. Support in accordance with claim 10 or 11, in which the tension springs are formed as gas tension springs (39).

13. Support in accordance with one of the preceding claims, in which the bearing housing (10) carrying the pivot arm (11) is mounted at a carrying support element (20) so as to be rotatable about a preferably vertical axis (19).

## Revendications

1. Support, comportant
- un bâti de palier (10),
- un bras pivotant (11) articulé au bâti de palier (10) et permettant un pivotement vertical, lequel bras est conçu pour supporter une force de traction, et
- un moteur (12) pour le pivotement vertical du bras pivotant (11) qui est monté sur le bâti de palier (10),
- un dispositif de transmission (13, 14, 15, 25) étant prévu entre le moteur (12) et le bras pivotant (11), ce dispositif de transmission transformant le mouvement rotatif du moteur (12) en un mouvement pivotant du bras pivotant (11), caractérisé en ce que le dispositif de transmission (13, 14, 15, 25) comporte un élément à levier (25) qui s'étend substantiellement presque perpendiculairement au bras pivotant,
- auquel est fixé un dispositif de traction (14, 15) qui est accouplé au moteur (12) par l'intermédiaire d'un engrenage (13) de manière à transformer le mouvement rotatif du moteur (12) en un mouvement pivotant de l'élément à levier (25), et qu'il comporte une tige filetée (15) pouvant être mise en rotation par le moteur (12), laquelle tige est accouplée à des barres de traction (14) commandant l'élément à levier (25) de manière à transformer le mouvement rotatif de la tige filetée en un mouvement linéaire des barres de traction (14),
- un palier pivotant (30) étant prévu, qui admet un mouvement pivotant des barres de traction (14) par rapport au bâti de palier (10),
- la tige filetée (15) et les barres de traction (14) étant alignées axialement sur le bras pivotant (11), lorsque celui-ci se trouve dans une position intermédiaire.

2. Support selon la revendication 1,
sur lequel la distance (R) entre le point de pivotement effectif du bras pivotant (11) et le point d'attaque du dispositif de traction (14, 15) sur l'élément à levier (25) ne représente qu'une fraction de la longueur du bras pivotant (11).

3. Support selon l'une des revendications 1 ou 2,
sur lequel l'élément à levier se présente sous forme d'éclisse à levier (25) solidaire du bras pivotant (11), qui s'étend substantiellement perpendiculairement par rapport au bras pivotant (11).

4. Support selon l'une des revendications 1 à 3,
sur lequel le moteur (12) est monté de manière pivotante sur le bâti de palier (10) de sorte que la force du moteur transmise au moyen de la tige filetée (15) agit axialement sur les barres de traction (14), indépendamment de la position du bras pivotant (11).

5. Support selon la revendication 4,
sur lequel la tige filetée (15) alignée axialement sur les barres de traction (14) forme l'élément de sortie d'un engrenage (13) commandé par le moteur.

6. Support selon la revendication 5,
sur lequel l'engrenage (13) est un engrenage à vis sans fin.

7. Support selon l'une des revendications 4, 5 ou 6,
sur lequel le moteur (12) est monté de manière pivotante sur le bâti de palier (10) de sorte que la tige filetée (15) et les barres de traction (14) disposées axialement par rapport à celle-ci s'etendent de manière substantiellement parallèle au bras pivotant (11), lorsque le bras pivotant (11) se trouve au milieu de sa plage de pivotement.

8. Support selon l'une des revendications précédentes,
sur lequel les barres de traction (14) comportent deux éclisses de traction (34) disposées en parallèle et à distance l'une de l'autre, lesquelles sont reliées avec l'une de leurs extrémités, par l'intermédiaire d'un bloc de fixation (35), à la tige filetée (15) et qui sont articulées avec leur autre extrémité sur respectivement une éclisse à levier (25) solidaire du bras pivotant (11).

9. Support selon l'une des revendications précédentes,
sur lequel le bras pivotant (11) présente une partie supérieure (16) et, disposée en parallèle à celle-ci, une partie inférieure (17) qui porte l'élément à levier (25), les parties supérieure et inférieure (16 ou 17) étant articulées avec une extrémité de manière pivotante au bâti de palier (10) et avec l'autre extrémité à un bâti de charge supplémentaire (18), de façon à former une tringlerie en parallélogramme qui permet un mouvement parallèle du bâti de charge supplémentaire (18) de manière à ce que celui-ci soit aligné horizontalement, indépendamment de la position de pivotement respective du bras pivotant (11).

10. Support selon l'une des revendications précédentes,
sur lequel des ressorts de traction (39) sont disposés entre le bâti de palier (10) et le bras pivotant (11).

11. Support selon la revendication 10,
sur lequel les ressorts de traction (39) sont articulés avec leurs extrémités affectées au bras pivotant (11) aux éclisses à levier (25).

12. Support selon la revendication 10 ou 11,
sur lequel les ressorts de tractions sont conçus en tant que ressorts de traction pneumatiques (39).

13. Support selon l'une des revendications précédentes,
sur lequel le bâti de palier (10) portant le bras pivotant (11) est monté sur un élément porteur (20) du support et pivote autour d'un axe (19) de préférence vertical.
